(19) Europäisches Patentamt
European Patent Office
Office européen des brevets

(11) **EP 4 287 287 A1**

(12) **EUROPEAN PATENT APPLICATION**
published in accordance with Art. 153(4) EPC

(43) Date of publication:
**06.12.2023 Bulletin 2023/49**

(21) Application number: **22746313.0**

(22) Date of filing: **28.01.2022**

(51) International Patent Classification (IPC):
*H01M 4/04* (2006.01)   *H01M 4/66* (2006.01)
*H01M 4/13* (2010.01)   *H01M 4/62* (2006.01)
*H01M 4/02* (2006.01)

(52) Cooperative Patent Classification (CPC):
H01M 4/02; H01M 4/04; H01M 4/13; H01M 4/62;
H01M 4/66

(86) International application number:
**PCT/KR2022/001664**

(87) International publication number:
**WO 2022/164287 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021   KR 20210013321**
**29.01.2021   KR 20210013323**

(71) Applicant: **Lg Chem, Ltd.**
**Seoul 07336 (KR)**

(72) Inventors:
• **LEE, Geun Sung**
**Daejeon 34122 (KR)**

• **PARK, Jin Woo**
**Daejeon 34122 (KR)**
• **LEE, Il Ha**
**Daejeon 34122 (KR)**
• **SONG, In Taek**
**Daejeon 34122 (KR)**
• **KIM, Ki Hwan**
**Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **ELECTRODE**

(57)     The present application relates to an electrode comprising a current collector and an active material layer, which can provide an electrode capable of ensuring adhesion force between particles, and adhesion force between the active material layer and the current collector in high levels compared with a binder content in the active material layer. The present application can also provide a use of the electrode.

Fig. 6

EP 4 287 287 A1

## Description

### Technical Field

This application claims the benefit of priority based on Korean Patent Application No. 10-2021-0013321 filed on January 29, 2021 and Korean Patent Application No. 10-2021-0013323 filed on January 29, 2021, the disclosures of which are incorporated herein by reference in their entirety.

The present application relates to an electrode.

### Background Art

The application area of energy storage technology expands to mobile phones, camcorders, notebook PCs, electric vehicles, and the like.

One of the research fields of energy storage technology is a secondary battery capable of charging and discharging, and research and development for improving the capacity density and specific energy of such a secondary battery are conducted.

An electrode (positive electrode or negative electrode) applied to a secondary battery is usually manufactured by forming an active material layer comprising an electrode active material and a binder on a current collector.

In order to smoothly induce the inter-active material electron movement, and the electron movement between the current collector and the active material layer in the electrode of the secondary battery, the adhesion force between the active material particles, and the adhesion force between the active material layer and the current collector must be secured.

When the adhesion force between the particles in the active material layer is insufficient, a phenomenon that the particles fall off from the electrode may occur, where such a phenomenon deteriorates the stability and performance of the battery. For example, particles falling off due to insufficient adhesion force between particles from the surfaces of the negative electrode and the positive electrode may cause a microshort or the like inside the battery, thereby causing deterioration of performance and a fire due to a short circuit.

When the adhesion force between the active material layer and the current collector is lowered, the movement speed of electrons between the active material layer and the current collector is reduced, which may also cause deterioration of the speed characteristics and cycle characteristics.

Therefore, attempts, which are intended to introduce a large amount of the binder into the active material layer, have been made in order to increase adhesion force between particles in the active material layer or adhesion force between the active material layer and the current collector.

However, in this case, the ratio of the active material decreases as the ratio of the binder increases, so that there are problems such as performance deterioration and capacity deterioration of the battery due to an increase in electrode resistance, a decrease in conductivity, and the like.

### Disclosure

### Technical Problem

The present application relates to an electrode. It is one object of the present application to provide an electrode comprising a current collector and an active material layer, wherein the electrode can secure a high level of inter-particle adhesion force and adhesion force between the active material layer and the current collector compared to the binder content in the active material layer. It is another object of the present application to provide a secondary battery having excellent performance, and the like with a high capacity.

### Technical Solution

Among the physical properties mentioned in this specification, physical properties in which the measurement temperature affects results are results measured at room temperature, unless otherwise specified.

The term room temperature is a natural temperature without warming or cooling, which means, for example, any one temperature within the range of 10°C to 30°C, or a temperature of about 23°C or about 25°C or so.

In this specification, the unit of temperature is Celsius (°C), unless otherwise specified.

The term normal pressure is a natural pressure without pressurizing or depressurizing, which usually means an atmospheric pressure at the atmospheric pressure level, and means, for example, an atmospheric pressure of about 740 to 780 mmHg or so.

In the case of a physical property in which the measurement humidity affects results, the relevant physical property is a physical property measured at natural humidity that is not specifically controlled at the room temperature and/or normal pressure state.

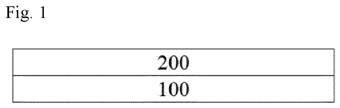

The electrode of the present application may comprise a current collector; and an active material layer present on one side or both sides of the current collector. Figure 1 is a cross-sectional diagram of an exemplary electrode, and shows a structure comprising a current collector (100) and an active material layer (200) on one side thereof. In the electrode structure, the active material layer may also be formed in contact with the surface of the current collector, or another layer may also exist between the current collector and the active material layer.

The electrode of the present application may secure high adhesion force between particles in the active material layer, and may simultaneously secure high adhesion force between the active material layer and the current collector as compared to the binder content in the active material layer, through controlling the distribution of the binder in the active material layer, particularly the distribution of the binder in the active material layer adjacent to the current collector.

The active material layer comprises an electrode active material and a binder, where the adhesion force is expressed by the binder. Therefore, the prior art approach for securing the adhesion force was to place the binder as much as possible in positions where the expression of the adhesion force is required. For example, a technique for improving wetting properties of the binder to the current collector by increasing affinity of the current collector with the binder is representative. However, this approach method has a problem that the proportion of the binder that can contribute to the improvement of the real adhesion force is lowered in that the binder is evenly distributed over the entire region of the current collector surface.

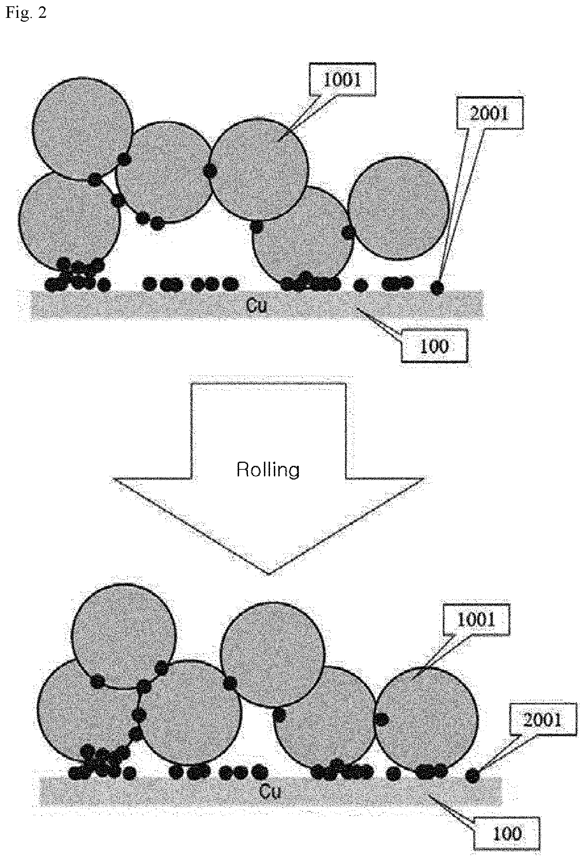

As conceptually shown in Figure 2, the electrode active material (1001) normally present in the active material layer has a larger particle diameter relative to the particulate binder (2001). In this state, for example, when the particulate binder (2001) is evenly distributed on the current collector (100) by a method of increasing the affinity of the current collector with the binder, or the like, the probability that the particulate binder (2001) on the current collector (100) and the electrode active material (1001) will contact may be reduced. That is, among the binders distributed on the current collector, the proportion of the binder that does not contribute to the improvement of the adhesion force increases. As the proportion of the binder that does not contribute to the improvement of the adhesion force is increased, the amount of the binder to be introduced to implement the desired adhesion force increases, and accordingly, the amount of the electrode active material that can be introduced into the active material layer decreases. This may lead to an increase in electrode resistance, a decrease in electrical conductivity, performance deterioration and capacity deterioration of the battery, and the like.

In the present application, by controlling the binder area ratio for a portion where the binder is not relatively concentrated on the surface of the current collector, it has been confirmed that the adhesion force between particles in the active material layer and the adhesion force between the active material layer and the current collector can be greatly improved compared to the binder content. Here, a portion in which the binder is not relatively concentrated may be referred to as a blank region in this specification, and a portion in which the binder is relatively concentrated may be referred to as a network region.

In the present application, the term network region is a region identified on the surface of the current collector after a standard peel test, which may mean a region comprising at least a binder and having a height of a certain level or more. The network region comprises at least a binder, which may also comprise other additional components (e.g., a thickener included in the slurry, etc.).

For example, the network region may be a region having a height of three or more times the average particle diameter of the binder. That is, if the average particle diameter of the binder is D, the network region may have a height of 3D or more. The height of the network region may be further adjusted and defined within a range of 4 times or more, 5 times or more, 6 times or more, 7 times or more, 8 times or more, 9 times or more, 10 times or more, 11 times or more, 12 times or more, 13 times or more, or 14 times or more and/or within a range of 50 times or less, 45 times or less, 40 times or less, 35 times or less, 30 times or less, 25 times or less, 20 times or less, 15 times or less, 14 times or less, 13 times or less, 12 times or less, or 11 times or less, relative to the average particle diameter of the binder.

The height of the network region may be, for example, 1.4 $\mu$m or more. In another example, the height of the network region may be in the range of 1.5 $\mu$m or more, 1.6 $\mu$m or more, 1.7 $\mu$m or more, 1.8 $\mu$m or more, 1.9 $\mu$m or more, 2 $\mu$m or more, or 2.1 $\mu$m or more, or may also be 10 $\mu$m or less, 9 $\mu$m or less, 8 $\mu$m or more. or less, 7 $\mu$m or less, 6 $\mu$m or less, 5 $\mu$m or less, 4 $\mu$m or less, 3 $\mu$m or less, 2.5 $\mu$m or less, 2 $\mu$m or less, or 1.8 $\mu$m or less or so.

The height of the network region is a height confirmed by a method described in an example using a confocal laser spectro microscope. In addition, the height of the network region is an arithmetic mean height of a plurality of network regions present on the current collector.

The average particle diameter of the particulate binder may mean a so-called D50 particle diameter or median diameter obtained by a laser diffraction method. In one example, when two types of particulate binders having different average particle diameters exist in the active material layer, the average particle diameter of the particulate binder may mean a D50 particle diameter or median particle diameter measured for a particulate binder having a larger average particle diameter among the two types of particulate binders, may mean a D50 particle diameter or median particle diameter measured for a particulate binder having a smaller average particle diameter among the two types of particulate binders, may mean a value calculated by considering the weight fraction of the two types of particulate binders, or may mean a D50 particle diameter or median particle diameter measured for the entire mixture in which two different types of particulate binders are present. Here, for example, when the particulate binder having an average particle diameter of D1 is present in a weight of W1, and the particulate binder having an average particle diameter of D2 is present in a weight of W2, the value calculated by considering the weight fraction of the two types of particulate binders may mean a value calculated as $D=(D1 \times W1 + D2 \times W2)/(W1+W2)$. Upon the above confirmation, the particle diameters D1 and D2, and the weights W1 and W2 are values of the same unit as each other, respectively.

In this specification, the term blank region is a region that does not comprise the particulate binder, or means a region whose height is 1.5 times or less the average particle diameter of the particulate binder even if it comprises the binder. The method of measuring the height is the same as the method of measuring the network region. In addition, the height in the blank region may be, for example, 1.5 times or less the average particle diameter of the particulate binder, and in another example, it may also be 1.3 times or less, 1.1 times or less, 0.9 times or less, 0.7 times or less, 0.5 times or less, 0.3 times or less, or 0.1 times or less or so.

The network region and the blank region can be confirmed through an FE-SEM (field emission scanning electron microscope) image taken with respect to the current collector surface after a standard peel test to be described below, where a specific confirmation method is described in Examples.

The network region and the blank region can be confirmed on the surface of the current collector after a standard peel test. The standard peel test is a test for peeling the active material layer from the electrode, and is a test performed according to the method described below.

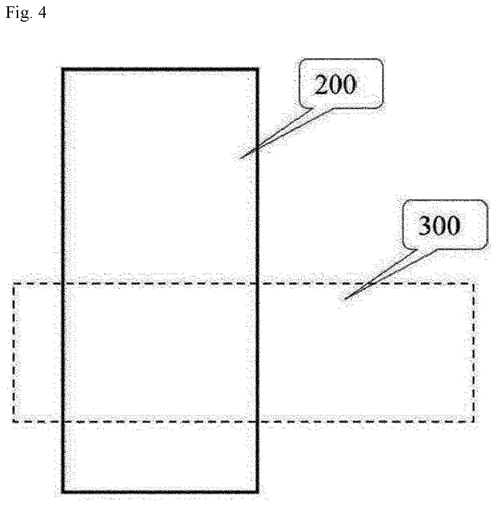

The standard peel test is performed using 3M's Scotch Magic tape Cat. 810R. In order to perform the standard peel test, first, the electrode is cut to a size of 20 mm or so in width and 100 mm or so in length. The Scotch Magic tape Cat. 810R is also cut so that the horizontal length is 10 mm and the vertical length is 60 mm. Thereafter, as shown in Figure 4, the Scotch Magic tape Cat. 810R (300) is attached on the active material layer (200) of the electrode in a cross state. In the attachment, the standard peel test may be performed so that a certain portion of the Magic tape Cat. 810R (300) protrudes. Then, the protruding portion is hold, and the magic tape Cat. 810R (300) is peeled off. At this time, the peel rate and the peel angle are not particularly limited, but the peel rate may be about 20mm/sec or so, and the peel angle may be about 30 degrees or so. In addition, regarding the attachment of the Scotch Magic tape Cat. 810R (300), it is attached by reciprocating and pushing the surface of the tape with a roller having a weight of 1kg or so, and a radius and width of 50mm and 40mm, respectively, once after attaching the tape.

Through the above process, when the Scotch Magic tape Cat. 810R (300) is peeled off, the component of the active material layer (200) is peeled off together with the Scotch Magic tape Cat. 810R (300). Subsequently, the above process is repeated using the new Scotch Magic tape Cat. 810R (300).

The standard peel test may be performed by performing this process until the components of the active material layer (200) do not come off on the Scotch Magic tape Cat. 810R (300) and thus are not observed.

Regarding the matter that no component of the active material layer (200) comes off on the Scotch Magic tape Cat. 810R (300), when the surface of the Scotch Magic tape peeled from the active material layer is compared with the surface of the unused Scotch Magic tape so that the tones of both are substantially the same, it may be determined that the component of the active material layer does not come off (visual observation).

A specific way to run the standard peel test is described in Examples.

In the present application, the binder occupied area ratio on the blank region may be, for example, 20% or less. In another example, the occupied area ratio may be 19.5% or less, 19% or less, 18.5% or less, 18% or less, 17.5% or less, 17% or less, 16.5% or less, 16% or less, 15.5% or less, 15% or less, 14.5% or less % or less, 14% or less, 13.5% or less, 13% or less, 12.5% or less, 12% or less, 11.5% or less, 11% or less, 10.5% or less, 10% or less, 9.5% or less, 9% or less, or 8.5% or less. By minimizing the ratio of the binder occupied area on the blank region, it is possible to improve the adhesion area between the current collector and the active material layer and/or the particles in the active material layer compared to the binder content, so that the lower limit of the area ratio is not particularly limited, but may be 0% or less, 0.5% or more, 1% or more, 1.5% or more, 2% or more, 2.5% or more, 3% or more, 3.5% or more, 4% or more, 4.5% or more, 5% or more, 5.5% or more, 6% or more, 6.5% or more or more, 7% or more, 7.5% or more, 8% or more, 8.5% or more, 9% or more, 9.5% or more, 10% or more, 10.5% or more, or 11% or more.

The binder occupied area ratio on the blank region may mean, for example, as the surface of the current collector after the standard peel test is divided into a network region and a blank region according to the above-mentioned criteria, a ratio of the area in which the particulate binder is present for any blank region of the blank regions. In other words, it may mean a ratio $(A1/(A1+A2) \times 100)$ of the area (A1) of the region without the particulate binder to the sum (A1+A2) of the area (A1) of the region without the particulate binder and the area (A2) of the region in which it comprises the particulate binder, but the height thereof is 1.5 times or less the average particle diameter of the particulate binder (A1) in the blank region. The ratio of the binder occupied area on the blank region may be measured in the manner described in Examples below.

The matter of controlling the ratio of the occupied areas of the blank region as described above is different from the concept of the prior art intended to secure adhesion force by improving the wetting properties of the binder to the current collector. In the present application, by controlling the area ratio of the binder on the blank region as above, the contact probability of the binder with components such as electrode active material particles forming the active material layer in the electrode manufacturing process may be increased, the migration of the binder may be controlled, and the spread of the suitable network region in the rolling process may be achieved.

The above effect can be achieved more effectively by forming the blank region and the network region at an appropriate ratio.

The present application may relate to, for example, an electrode in which the ratio of the occupied area on the current collector surface of the blank region is 50% or more. The area ratio of the blank region may be, for example, one obtained by measuring the ratio of the occupied area of the blank region based on the total area of the current collector surface. In another example, the ratio may be 52% or more, 54% or more, 56% or more, 58% or more, 60% or more, 62% or more, or 64% or more, or may be 80% or less, 78% or less, 76% or less, 74% or less, 72% or less, 70% or less, 68% or less, 66% or less, 64% or less, 62% or less, 60% or less, 58% or less, 56% or less, or 54% or less.

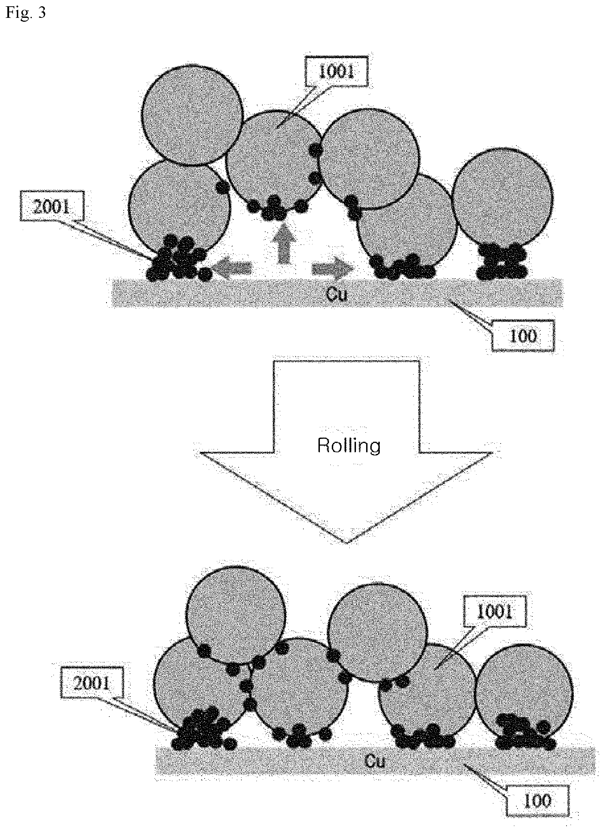

For example, as conceptually shown in Figure 3, the network region on the current collector (100) can have a relatively higher height by forming the blank region at a certain ratio or more, whereby it is possible to increase the probability that particles such as the electrode active material (1001) positioned relatively far apart from each other contact the binder. In addition, since the probability that the particulate binder (2001) will be subjected to migration to the upper part to an appropriate level can be increased by forming the blank region, a large amount of the particulate binder (2001) can be positioned at the interface between the particles in the active material layer. In addition, by forming the network region and the blank region at an appropriate ratio, the spread of the network region during the rolling process can be appropriately controlled, thereby securing further improved adhesion force.

Accordingly, in the present application, it is possible to provide an electrode having excellent adhesion force between particles in the active material layer and/or between the active material layer and the current collector while maintaining a high content of the electrode active material in the active material layer relative to the binder content.

The occupied area of the network region in the present application may satisfy, for example, Equation 1 below.

[Equation 1]

$$A/W \leq 30$$

In Equation 1, A is the ratio of the occupied area of the network region to the total area of the current collector surface, and W is the content of the binder in the active material layer.

In Equation 1, the unit of A is %, and the unit of W is weight%. Therefore, the unit of A/W in Equation 1 is $wt^{-1}$.

When the composition of the slurry in the electrode manufacturing process is known, the content of the binder is substantially the same as the content ratio of the binder in the solid content (part excluding the solvent) of the relevant slurry. In addition, when the composition of the slurry in the electrode manufacturing process is not known, the content of the binder may be confirmed through TGA (thermogravimetric analysis) analysis of the active material. For example, when an SBR (styrene-butadiene rubber) binder is applied as the binder, the content of the binder may be confirmed through the content of the SBR binder obtained from the 370°C to 440°C decrease in the temperature-mass curve obtained by performing the TGA analysis of the active material layer, and increasing the temperature at a rate of 10°C per minute.

In Equation 1, in another example, A/W may be in the range of 28 or less, 26 or less, 24 or less, 22 or less, 20 or less, or 18 or less, and/or may be in the range of 5 or more, 7 or more, 9 or more, 11 or more, 13 or less, 15 or more, 17 or more, 19 or more, 21 or more, or 23 or more.

In the electrode of the present application, for example, the ratio of the occupied area of the network region on the current collector surface may be 50% or less. The area ratio of the network region may be, for example, one obtained by measuring the ratio of the occupied area of the network region based on the total area of the current collector surface. In another example, the ratio may be 48% or less, 46% or less, 44% or less, 42% or less, 40% or less, 38% or less, 36% or less, or 34% or less or so, or may also be 20% or more, 25% or more, 30% or less or more, 35% or more, 40% or more, or 45% or more or so.

The type of the current collector applied in the present application is not particularly limited, where a known current collector may be used. In order to implement the binder area ratio on the blank region and/or the area ratio of the blank region as described above, the surface characteristics (water contact angle and/or O/N ratio, etc.) of the current collector may be controlled, as described below. As the current collector, for example, a film, sheet, or foil made of stainless steel, aluminum, nickel, titanium, baked carbon, copper, carbon, stainless steel surface-treated with nickel, titanium or silver, an aluminum-cadmium alloy, and the like may be used. In order to realize the desired binder area ratio on the blank region and/or area ratio of the blank region, one having surface characteristics to be described below may be selected from the current collectors, or the surface characteristics may be adjusted by additional treatment.

The thickness and shape of the current collector, and the like are not particularly limited, and an appropriate type is selected within a known range.

The active material layer formed on the current collector basically comprises an electrode active material and a binder.

A known material may be used as the binder, and components known to contribute to bonding of components such as the active material in the active material layer and bonding of the active material layer and the current collector may be used. As the applicable binder, one, or a combination of two or more selected from PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (Styrene-Butadiene rubber), fluororubber, and other known binders may be used.

For the formation of the suitable network and blank regions, it is appropriate to use a particulate binder as the binder, and for example, it is appropriate to use a particulate binder with an average particle diameter of about 50 to 500 nm or so. At this time, the meaning of the average particle diameter is the same as described above. In another example, the average particle diameter of the particulate binder may be 70 nm or more, 90 nm or more, 110 nm or more, 130 nm or more, or 140 nm or more, or may also be 450 nm or less, 400 nm or less, 350 nm or less, 300 nm or less, 250 nm or less, or 200 nm or less or so.

For formation of the suitable network region, it may be advantageous to use a binder having a solubility parameter in a range to be described below as the binder.

In the present application, it is possible to secure a high level of adhesion force while taking a relatively small ratio of the binder in the active material layer. For example, the ratio of the binder in the active material layer may be about 0.5 to 10 weight% or so. In another example, the ratio may be 1 weight% or more, 1.5 weight% or more, 1.6 weight% or more, 1.7 weight% or more, 1.8 weight% or more, or 1.9 weight% or more, or may also be further controlled in the range of 9.5 weight% or less, 9 weight% or less, 8.5 weight% or less, 8 weight% or less, 7.5 weight% or less, 7 weight% or less, 6.5 weight% or less, 6 weight% or less, 5.5 weight% or less, 5 weight% or less, 4.5 weight% or less, 4 weight% or less, 3.5 weight% or less, 3 weight% or less, or 2 weight% or less or so. The method of confirming the ratio (content) of the binder in the active material layer is as described above.

The electrode active material included in the active material layer may be a positive active material or a negative active material, and the specific type is not particularly limited. For example, as the positive electrode active material, active materials including $LiCoO_2$, $LiNiO_2$, $LiMn_2O_4$, $LiCoPO_4$, $LiFePO_4$, $LiNiMnCoO_2$ and $LiNi_{1-x-y-z}Co_xM1_yM2_zO_2$ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying $0 \leq x < 0.5$, $0 \leq y < 0.5$, $0 \leq z < 0.5$, $0 < x+y+z \leq 1$), and the like may be used, and as the negative active material, active materials including natural graphite, artificial graphite, carbonaceous materials; lithium-containing titanium composite oxides (LTO), Si, Sn, Li, Zn, Mg, Cd, Ce, Ni or Fe metals (Me); alloys composed of the metals (Me); oxides (MeOx) of the metals (Me); and composites of the metals (Me) with carbon, and the like may be used.

For the formation of the appropriate network region and blank region, it is appropriate to use a particulate active material as the electrode active material, and for example, it is appropriate to use one having an average particle diameter of 1 to 100 μm or so. In another example, the average particle diameter of the particulate active material may also be 5 μm or more, 10 μm or more, or 15 μm or more, or may also be 90 μm or less, 80 μm or less, 70 μm or less, 60 μm or less, 50 μm or less, 40 μm or less, 30 μm or less, 25 μm or less, or 20 μm or less or so.

The ratio (D90/D10) of a 90% volume cumulative particle diameter (D90) of the electrode active material to a 10% volume cumulative particle diameter (D10) may be 15 or less. In another example, the ratio D90/D10 may be 14 or less, 13 or less, 12 or less, 11 or less, 10 or less, 9 or less, 8 or less, 7 or less, 6 or less, 5 or less, 4 or less, or 3 or less or so, or may be more than 1, 1.5 or more, 2 or more, 2.5 or more, 3 or more, or 3.5 or more or so.

The 90% volume cumulative particle diameter (D90) of the electrode active material may be in the range of 5 μm to 500 μm. In another example, the particle diameter (D90) may be about 7 μm or more, about 9 μm or more, about 11 μm or more, about 13 μm or more, about 15 μm or more, about 17 μm or more, about 19 μm or more, about 20 μm or more, about 21 μm or more, about 22 μm or more, about 23 μm or more, about 24 μm or more, or about 25 μm or more, or may also be about 450 μm or less, about 400 μm or less, about 350 μm or less, about 300 μm or less, about 250 μm or less, about 200 μm or less, about 150 μm or less, about 100 μm or less, about 90 μm or less, 80 μm or less, 70 μm or less, 60 μm or less, 50 μm or less, 40 μm or less, 30 μm or less, or 20 μm or less or so.

The average particle diameter and the cumulative volume particle diameters D10 and D90 of the particulate electrode active material are particle diameters of the respective materials in the slurry applied for preparing the active material layer. Therefore, when the electrode is manufactured through a rolling process, there may be a slight difference from the respective particle diameters confirmed in the active material layer.

The average particle diameter, and the cumulative volume particle diameters D10 and D90 of the electrode active material are also particle diameters obtained by a laser diffraction method, and the method of obtaining these particle diameters is described in Examples. In addition, for example, in the case where the active material layer is a rolled layer, the particle diameters mentioned herein for the particulate binder and particulate active material in the active material layer are average particle diameters before rolling, unless otherwise specified.

In one example, when two types of electrode active materials having different average particle diameters, and D 10 and D90 particle diameters exist in the active material layer, the average particle diameters, D10s and D90s in consideration of the weight fraction of the two types of electrode active materials may be defined as the above average particle diameters, D10s and D90s of the electrode active materials in this specification.

For example, in the case of an average particle diameter, when the particulate electrode active material with an average particle diameter of Da is present in a weight of W1, and the particulate electrode active material with an average particle diameter of Db is present in a weight of W2, the average particle diameter D may be defined as $D=(Da \times W1+Db \times W2)/(W1+W2)$, which is the same for the D10 and D90 particle diameters. In addition, upon the above confirmation, the particle diameters Da and Db, and the weights W1 and W2 are values of the same unit as each other, respectively.

Although the reason is not clear, it is expected that by the particle diameter characteristics as above, the dispersion state of the binder that can achieve the desired position of the binder is achieved in the slurry during the electrode manufacturing process, and the migration phenomenon of the binder is also appropriately controlled. In addition, by the particle diameter characteristics as above, it is also possible to prevent problems such as cycle expansion while maximally securing the power and capacity characteristics of the electrode active material.

For the formation of the appropriate network region and blank region, the particle diameter relation between the particulate binder and the active material may be adjusted. For example, the ratio (D1/D2) of the average particle diameter (D1, unit nm) of the particulate electrode active material to the average particle diameter (D2, unit nm) of the particulate binder may be in the range of 10 to 1,000. In another example, the ratio (D1/D2) may be 20 or more, 30 or more, 40 or more, 50 or more, 60 or more, 70 or more, 80 or more, 90 or more, 100 or more, 110 or more, 120 or more, or 130 or more, or may be 900 or less, 800 or less, 700 or less, 600 or less, 500 or less, 400 or less, 300 or less, 200 or less, or 150 or less or so.

Meanwhile, for the rolled active material layer, the average particle diameter of the particulate binder and the active material mentioned in this specification means, in the case of a rolled electrode active material layer, the average particle diameter before rolling.

In the present application, it is possible to secure excellent adhesion force while maintaining a relatively high ratio of the active material in the active material layer.

For example, the active material in the active material layer may be in the range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, or 5500 parts by weight or less or so.

The active material layer may also further comprise other necessary components in addition to the above components. For example, the active material layer may further comprise a conductive material. As the conductive material, for example, a known component may be used without any particular limitation, as long as it exhibits conductivity without causing chemical changes in the current collector and the electrode active material. For example, as the conductive material, one or a mixture of two or more selected from graphite such as natural graphite or artificial graphite; carbon black such as carbon black, acetylene black, ketjen black, channel black, furnace black, lamp black, or summer black; a conductive fiber such carbon fiber or metal fiber; a carbon fluoride powder; a metal powder such as an aluminum powder, or a nickel powder; a conductive whisker such as zinc oxide or potassium titanate; a conductive metal oxide such as titanium oxide; a polyphenylene derivative, and the like may be used.

The content of the conductive material is controlled as necessary, without being particularly limited, but it may be usually included in an appropriate ratio within the range of 0.1 to 20 parts by weight or 0.3 to 12 parts by weight relative to 100 parts by weight of the active material. A method of determining the content of the conductive material to an appropriate level in consideration of the cycle life of the battery, and the like is known.

The active material layer may also comprise other necessary known components (e.g., thickeners such as carboxymethyl cellulose (CMC), starch, hydroxypropyl cellulose or regenerated cellulose, etc.) in addition to the above components.

The thickness of the active material layer is not particularly limited, which may be controlled to have an appropriate level of thickness in consideration of desired performance. The thickness of the active material layer may mean, for example, the thickness of the active material layer after performing rolling to be described below. The thickness of the active material layer may be, for example, in the range of about 10 to 500 μm. In another example, the thickness may be about 30 μm or more, 50 μm or more, 70 μm or more, 90 μm or more, or 100 μm or more, or may also be about

450 μm or less, 400 μm or less, 350 μm or less, 300 μm or less, 250 μm or less, 200 μm or less, or 150 μm or less or so.

The active material layer may be formed to have a certain level of porosity. The porosity is usually controlled by rolling during the manufacturing process of the electrode. The active material layer may have a porosity of about 35% or less or so. The porosity may also be further adjusted in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more. The rolling process controlled to have the porosity may contribute to the formation of the desired network region and blank region in the present application, as described below. Here, a method of obtaining the porosity is known. For example, the porosity of the rolled active material layer may be calculated by comparing the ratio of the difference between the real density of the active layer and the density after rolling.

The electrode of the present application may be manufactured by a manufacturing method to be described below. In general, the electrode is manufactured by coating the slurry on the current collector, drying it, and then performing a rolling process. In the present application, by controlling the compositions of the slurry, the surface characteristics of the current collector on which the slurry is coated, drying conditions and/or rolling conditions in the above process, it is possible to form the desired network region and blank region, and the like.

For example, in the manufacturing process of the present application, as a slurry, one that a relatively hydrophobic binder (suitably a particulate binder having a specific average particle diameter while having relative hydrophobicity) is dispersed in a certain amount in a relatively polar solvent may be applied. Such a slurry is coated on a current collector whose surface characteristics are controlled, as described below. The reason is not clear, but when such a slurry is coated on the current collector, it is expected that the dispersion state of the binder in the slurry, the affinity of the solvent of the slurry with the current collector surface and/or the affinity of the current collector surface with the binder in the slurry, and the like are mutually combined with each other to form a blank region and a network region of the desired shape.

For example, the affinity of the solvent with the current collector surface affects the contact angle of the solvent on the current collector surface, where the contact angle may form a force in a certain direction in the slurry due to capillary action or the like upon evaporation of the solvent. The affinity of the binder with the solvent and the amount of the binder (also, the particle diameter in the case of the particulate binder) affect the dispersion state of the binder in the slurry, and the affinity of the binder with the current collector surface affects the dispersion state of the binder in the slurry, or the binder distribution shape into the current collector surface, and the like.

In the present application, it has been confirmed that the desired level of network region and blank region is formed through the dispersion state of the binder and the evaporation aspect of the solvent when the slurry of the compositions to be described below has been formed on the current collector having the surface characteristics to be described below, and the shear force in the slurry generated thereby.

The method of manufacturing an electrode of the present application may comprise, for example, a step of forming a layer of slurry on a current collector. The slurry may comprise a solvent, a binder and/or an electrode active material.

In order to form the desired network region and blank region, and the like, for example, the surface characteristics of the current collector on which the layer of the slurry is formed may be controlled.

The surface of the current collector on which the layer of the slurry is formed may have, for example, a water contact angle of 15 degrees or less. In another example, the water contact angle may be further controlled in the range of 14 degrees or less, 13 degrees or less, 12 degrees or less, 11 degrees or less, 10 degrees or less, 9 degrees or less, 8 degrees or less, 7 degrees or less, or 6 degrees or less and/or in the range of 1 degree or more, 2 degrees or more, 3 degrees or more, 4 degrees or more, 5 degrees or more, 6 degrees or more, 7 degrees or more, 8 degrees or more, 9 degrees or more, or 10 degrees or more or so.

The surface of the current collector on which the layer of the slurry is formed may have, for example, a content ratio (O/N) of oxygen to nitrogen of 60 or less. The content may mean, for example, an element percentage (atomic%) obtained by using an ESCA instrument, which is a photoelectron spectrometer, according to the following examples. That is, the content ratio (O/N) of oxygen to nitrogen may mean, for example, a ratio of an elemental percentage of oxygen to an elemental percentage of nitrogen. In another example, the O/N may be 58 or less, 56 or less, 54 or less, 52 or less, 50 or less, 48 or less, 46 or less, 44 or less, 42 or less, 40 or less, 38 or less, or 36 or less, or may be 5 or more, 10 or more, 15 or more, 20 or more, 25 or more, 30 or more, 35 or more, or 40 or more.

Among the current collectors as described above, a current collector exhibiting the water contact angle and/or the content ratio (O/N) of oxygen to nitrogen may be selected, and if necessary, an additional treatment for controlling the water contact angle of the current collector and/or the content ratio (O/N) of oxygen to nitrogen, and the like may also be performed.

At this time, the kind of the applied treatment is not particularly limited. Various treatment methods capable of controlling the water contact angle and/or the content ratio (O/N) of oxygen to nitrogen of the current collector surface are known in the industry.

As the suitable treatment method, a so-called atmospheric pressure plasma method may be exemplified. As is known, the plasma is a state in which electrons and ions formed by applying energy to a gas exist, and the water contact angle and/or the content ratio (O/N) of oxygen to nitrogen of the surface of the current collector, and the like may be controlled by exposure to the plasma.

The plasma treatment may be performed, for example, by exposing the current collector to plasma generated by applying a voltage while injecting air or oxygen together with an inert gas into the processing space. At this time, the type of the applicable inert gas is not particularly limited, but may be exemplified by, for example, nitrogen gas, argon gas and/or helium gas, and the like.

The air or oxygen may be injected, for example, at a flow rate of about 0.01 to 2 LPM. The injection flow rate may also be adjusted in the range of 0.05 LPM or more, 0.1 LPM or more, 0.15 LPM or more, 0.2 LPM or more, 0.25 LPM or more, 0.3 LPM or more, 0.35 LPM or more, 0.4 LPM or more, 0.45 LPM or more, 0.5 LPM or more, or 0.55 LPM or more, and/or in the range of 1.5LPM or less, 1LPM or less, 0.9LPM or less, 0.8LPM or less, 0.7LPM or less, or 0.65 LPM or less.

Also, the inert gas may be injected, for example, at a flow rate of about 200 to 600 LPM. The injection flow rate may also be adjusted within the range of 220 LPM or more, 240 LPM or more, 260 LPM or more, 280 LPM or more, or 290 LPM or more and/or in the range of 550 LPM or less, 500 LPM or less, 450 LPM or less, 400 LPM or less, 380 LPM or less, 360 LPM or less, 340 LPM or less, 320 LPM or less, or 310 LPM or less.

In addition, the ratio (I/O) of the injection flow rate (I) of the inert gas to the injection flow rate (O) of oxygen or air at the time of the treatment may be controlled, for example, within a range of about 100 to 2000. In another example, the ratio (I/O) may be 150 or more, 200 or more, 250 or more, 300 or more, 350 or more, 400 or more, or 450 or more, or may be adjusted in the range of 1800 or less, 1600 or less, 1400 or less, 1200 or less, 1000 or less, 800 or less, or 600 or less.

The injection flow rate of air (or oxygen) and inert gas affects the partial pressure of each gas in the processing space, and thus determines the state of the generated plasma. In the present application, it is possible to efficiently generate plasma capable of securing the desired water contact angle and/or content ratio (O/N) of oxygen to nitrogen by controlling the injection flow rate at the same level as described above.

In a suitable example, only the air (and/or oxygen) and the inert gas may be injected into the processing space during the plasma treatment.

The atmospheric pressure plasma treatment may be performed, for example, to satisfy Equation 2 below.

[Equation 2]

$$1 < T \times P < 50$$

In Equation 2, T may be a plasma processing time (unit: seconds), and P may be power per unit area (unit: $W/cm^2$) based on the area of the electrode used for plasma generation.

In a suitable example, the plasma may be generated by applying a voltage of about 5 to 20 kV The applied voltage may determine the state of the plasma through control of the degree of ionization, and through application of the voltage in the above range, it is possible to efficiently generate plasma of a desired level. In another example, the applied voltage for generating the plasma may also be further controlled in the range of 5.5 kV or more, 6 kV or more, 6.5 kV or more, 7 kV or more, or 7.5 kV or more and/or in the range of 19 kV or less, 18 kV or less, 17 kV or less, 16 kV or less, 15 kV or less, 14 kV or less, 13 kV or less, 12 kV or less, 11 kV or less, 10 kV or less, or 9 kV or less.

The applied voltage may be adjusted such that, for example, the power per unit area (unit: $W/cm^2$) (P) is about 0.5 to 20 based on the area of the electrode for plasma generation. The power per unit area may be about 1 or more, 1.5 or more, 2 or more, 2.5 or more, 3 or more, 3.5 or more, or 4 or more, or may also be 18 or less, 16 or less, 14 or less, 12 or less, 10 or less, 8 or less, or 6 or less or so.

In addition, the exposure time (T) of the current collector to the plasma at the time of the plasma treatment may be controlled to about 0.1 seconds to about 20 seconds or so. In another example, the plasma treatment time (T) may be 0.2 seconds or more, 0.3 seconds or more, 0.4 seconds or more, 0.5 seconds or more, 0.6 seconds or more, 0.7 seconds or more, 0.8 seconds or more, 0.9 seconds or more, 1.0 seconds or more, or 1.1 seconds or more, or may be 18 seconds or less, 16 seconds or less, 14 seconds or less, 12 seconds or less, 10 seconds or less, or 8 seconds or less.

By controlling the applied voltage, the plasma treatment time (T) and/or the power per unit area (P) based on the area of the electrode used for plasma generation so that Equation 2 above is satisfied, the physical properties of the current collector surface according to plasma treatment may be controlled to a desired level. In another example, the value of T × P according to Equation 2 above may be 1.5 or more, 2 or more, 2.5 or more, 3 or more, 3.5 or more, 4 or more, 4.5 or more, 5 or more, 10 or more, 15 or more, 20 or more, or 25 or more, or may be 45 or less, 40 or less, 35 or less, 30 or less, 28 or less, 26 or less, 24 or less, 22 or less, 20 or less, 18 or less, 16 or less, 14 or less, 12 or less, 10 or less, 8 or less, or 6 or less, but is not limited thereto.

When the plasma treatment is performed in a continuous process such as a roll-to-roll process, the exposure time may be controlled by adjusting the moving speed of the current collector. For example, when the plasma treatment is performed while moving the current collector into the processing space at a constant speed, the moving speed of the current collector may be controlled within a range of, for example, about 1 to 100 mm/sec. In another example, the moving speed may be further adjusted in the range of about 3 mm/sec or more, about 5 mm/sec or more, about 7 mm/sec or more, 9 mm/sec or more, 15 mm/sec or more, 20 mm/sec or more, 25 mm/sec or more, 30 mm/sec or more, 35 mm/sec or more, 40 mm/sec or more, or 45 mm/sec or more and/or in the range of 95 mm/sec or less, 90 mm/sec or less, 85 mm/sec or less, 80 mm/sec or less, 75 mm/sec or less, 70 mm/sec or less or less, 65 mm/sec or less, 60 mm/sec or less, 55 mm/sec or less, 50 mm/sec or less, 45 mm/sec or less, 40 mm/sec or less, 35 mm/sec or less, 30 mm/sec or less, 25 mm/sec or less, 20 mm/sec or less, 15 mm/sec or less, or 13 mm/sec or less.

By controlling the moving speed of the current collector within the above range, the desired exposure time can be achieved.

The method of manufacturing an electrode of the present application may effectively form the desired network region and blank region by controlling the composition of the slurry, and the like.

As the binder included in the slurry, an appropriate one of the above-described types of binders may be selected and used. In order to achieve a desired dispersion state in a solvent to be described below, it may be necessary to use a binder having a solubility parameter of about 10 to 30 MPa$^{1/2}$ or so as the binder. In another example, the solubility parameter may be 11 MPa$^{1/2}$ or more, 12 MPa$^{1/2}$ or more, 13 MPa$^{1/2}$ or more, 14 MPa$^{1/2}$ or more, 15 MPa$^{1/2}$ or more, or 16 MPa$^{1/2}$ or more, or may be 28 MPa$^{1/2}$ or less, 26 MPa$^{1/2}$ or less, 24 MPa$^{1/2}$ or less, 22 MPa$^{1/2}$ or less, 20 MPa$^{1/2}$ or less, or 18 MPa$^{1/2}$ or less. The solubility parameter of such a binder can be confirmed through the literature (e.g., Yanlong Luo et al., 2017, etc.). For example, among the above-mentioned types of binders, a type having the solubility parameter as above may be selected.

For example, the slurry applied to the manufacturing process may comprise a solvent. As the solvent, one capable of properly dispersing the slurry components such as the electrode active material is usually applied, and an example thereof is exemplified by water, methanol, ethanol, isopropyl alcohol, acetone, dimethyl sulfoxide, formamide and/or dimethylformamide, and the like.

In the present application, it may be necessary to use a solvent having a dipole moment of approximately 1.3D or more in the solvents. In another example, the dipole moment of the solvent may be further controlled in the range of about 1.35 D or more, 1.4 D or more, 1.45 D or more, 1.5 D or more, 1.55 D or more, 1.6 D or more, 1.65 D or more, 1.7 D or more, 1.75 D or more, 1.8 D or more, or 1.85 D or more or so and/or in the range of 5 D or less, 4.5 D or less, 4 D or less, 3.5 D or less, 3 D or less, 2.5 D or less, 2 D or less, or 1.9 D or less or so. The dipole moments of solvents are known for each solvent.

A particulate binder may be used as the binder, and for example, the use of the particulate binder having the above-described average particle diameter.

The content of the binder in the slurry may be controlled in consideration of the desired dispersion state. For example, the binder may be included in the slurry so that the concentration of the binder relative to the solvent (=100×B/(B+S), where B is the weight (g) of the binder in the slurry, and S is the weight (g) of the solvent in the slurry.) is about 0.1 to 10 weight% or so. In another example, the concentration may be 0.5 weight% or more, 1 weight% or more, 1.5 weight% or more, or 2 weight% or more, or may also be 9 weight% or less, 8 weight% or less, 7 weight% or less, 6 weight% or less, 5 weight% It may be about 4 weight% or less, 3 weight% or less, or 2.5 weight% or less or so.

The slurry may comprise the electrode active material in addition to the above components. As the electrode active material, an appropriate type may be selected from the above-described types, and in consideration of the contribution to the desired dispersion state, an electrode active material in the form of particles, which has the above-described average particle diameter (D50 particle diameter), may be used.

The ratio of the electrode active material in the slurry may be adjusted so that the ratio of the electrode active material in the active material layer may be achieved.

In addition to the above components, the slurry may also comprise other components including the above-described conductive material, thickener, and the like, depending on the purpose.

Such a slurry may be applied on the surface of the current collector. In this process, the coating method is not particularly limited, and a known coating method, for example, a method such as spin coating, comma coating, or bar coating may be applied.

After the slurry is applied to the current collector surface whose water contact angle and/or N/O ratio is controlled through the plasma treatment or the like, a drying process of the slurry may be performed. Conditions under which the drying process is performed are not particularly limited, but it may be appropriate to adjust the drying temperature within the range of about 30°C to 150°C in consideration of the formation of the desired network region and blank region. In another example, the drying temperature may be about 35°C or more, 40°C or more, 45°C or more, 50°C or more, 55°C or more, 60°C or more, 65°C or more, or 70°C or more, or may also be 145°C or less, 140°C or less, 135°C or less, 130°C or less, 125°C or less, 120°C or less, 115°C or less, 110°C or less, 105°C or less, 100°C or less, 95°C or less, 90°C or less, 85°C or less, or 80°C or less or so.

The drying time may also be controlled in consideration of the dispersion state in consideration of the formation of the desired network region and blank region, and for example, it may be adjusted within the range of about 1 minute to 30 minutes. In another example, the time may be 2 minutes or more, 3 minutes or more, 4 minutes or more, 5 minutes or more, 6 minutes or more, 7 minutes or more, 8 minutes or more, or 9 minutes or more, or may also be controlled in the range of 25 minutes or less, 20 minutes or less, 15 minutes or less, 14 minutes or less, 13 minutes or less, 12 minutes or less, or 11 minutes or less.

Following the drying process, a rolling process may be performed. In this case, the formation state of the network region and the blank region may be adjusted even by the rolling conditions (e.g., pressure during rolling, etc.).

For example, the rolling may be performed so that the porosity of the rolled slurry (active material layer) is about 35% or less or so. The desired network region and blank region may be effectively formed by a pressure or the like applied upon rolling performed to have such a porosity. In another example, the porosity may also be further controlled in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more.

The thickness of the rolled slurry (i.e., the active material layer) is within the thickness range of the active material layer as described above.

During the manufacturing process of the electrode of the present application, necessary additional processes (e.g., cutting process, etc.) may also be performed in addition to the slurry coating, drying, and rolling.

The present application also relates to an electrochemical element comprising such an electrode, for example, a secondary battery.

The electrochemical element may comprise the electrode as a positive electrode and/or a negative electrode. As long as the electrode of the present application is used as the negative electrode and/or the positive electrode, other configurations or manufacturing methods of the electrochemical element are not particularly limited, and a known method may be applied.

**Advantageous Effects**

The present application relates to an electrode comprising a current collector and an active material layer, which can provide an electrode capable of securing a high level of interparticle adhesion force and adhesion force between the active material layer and the current collector relative to the binder content in the active material layer.

**Description of Drawings**

Figure 1 is a cross-sectional diagram of an exemplary electrode of the present application.

Figure 2 is a conceptual diagram of a formation state of an active material layer in the prior art.

Figure 3 is a conceptual diagram of a formation state of an active material layer in the present application.

Figure 4 is a conceptual diagram of a state where a standard peel test is performed.

Figure 5 is an image obtained by photographing the current collector surface at a magnification of 500 times with an FE-SEM device after performing a standard peel test for the electrode of Example 1.

Figure 6 is an image obtained by photographing the current collector surface at a magnification of 5000 times with an FE-SEM device after performing a standard peel test for the electrode of Example 1.

Figure 7 is an image obtained by photographing the current collector surface at a magnification of 500 times with an FE-SEM device after performing a standard peel test for the electrode of Example 2.

Figure 8 is an image obtained by photographing the current collector surface at a magnification of 5000 times with an FE-SEM device after performing a standard peel test on the electrode of Example 2.

Figure 9 is an image obtained by photographing the current collector surface at a magnification of 500 times with an FE-SEM device after performing a standard peel test on the electrode of Comparative Example 1.

Figure 10 is an image obtained by photographing the current collector surface at a magnification of 5000 times with an FE-SEM device after performing a standard peel test for the electrode of Comparative Example 1.

Figure 11 is a confocal laser spectro microscope image of the current collector surface of Example 1.

Figure 12 is a confocal laser spectro microscope image of the current collector surface of Example 2.

Figure 13 is a confocal laser spectro microscope image of the current collector surface of Comparative Example 1.

[Explanation of Reference Numerals]

100: current collector

200: active material layer

300: Scotch Magic tape

1001: electrode active material

2001: binder

**Mode for Invention**

Hereinafter, the present application will be described in more detail through Examples and Comparative Examples, but the scope of the present application is not limited to the following Examples.

**1. Measurement of water contact angle**

The water contact angle was measured by a tangent angle method by dropping 3 $\mu$l drops at a rate of 3$\mu$l/s using KRUSS' drop shape analyzer device (manufacturer: KRUSS, trade name: DSA100). Water and DM (diiodomethane) were dropped in the same way, and the surface energy was calculated by an OWRK (Owens-Wendt-Rabel-Kaelble) method.

**2. Measurement of O/N ratio of current collector surface**

The O/N ratio of the current collector surface was measured under the following conditions using an ESCA instrument (manufacturer: K-Alpha, trade name: ThermoFisher Scientific Inc.) as a photoelectron spectrometer.

-Conditions-

X-ray source: monochromatic Al K$\alpha$

X-ray spot size: 400$\mu$m

Survey scan: pass energy 200 eV, energy step 1eV, dwell time 10 ms

Narrow scan: scanned mode, pass energy 50 eV, energy step 0.1 eV, dwell time 50 ms

Operation mode: CAE (Constant Analyzer Energy) mode

Peak background: using Smart method

**3. Standard peel test**

The standard peel test was performed using 3M's Scotch Magic tape Cat. 810R. The electrodes prepared in Examples or Comparative Examples were each cut to a size of 20mm or so in width and 100mm or so in length to obtain a sample. On the active material layer of the obtained sample, the Scotch Magic tape Cat. 810R was attached by reciprocating and pushing a roller having a weight of 1kg, a radius of 50mm, and a width of 40mm once. At this time, the Scotch Magic tape was cut to have a width of 10mm or so and a length of 60mm or so, and used, and as shown in Figure 4, the Scotch Magic tape and the electrode active material layer were attached to be crossed to a length of about 20mm or so, and the protruding part was held and peeled off. At this time, the peel rate and the peel angle were set to a speed of about 20mm/sec or so and an angle of about 30 degrees or so. A new scotch tape was replaced and used every time it was peeled off. The above process was repeated until the components of the active material layer did not come out on the surface of the Scotch Magic tape. It was visually observed whether or not the components of the active material layer came out, and when the tone did not substantially change compared to the unused tape, it was determined that the components of the active material layer did not come out.

**4. Confirmation of network region and blank region**

After the standard peel test, a network region and a blank region were confirmed on the current collector surface. After the standard peel test, the surface of the current collector was photographed at a magnification of 500 times with an FE-SEM (field emission scanning electron microscope) device (manufacturer: HITACHI, trade name: S4800) to obtain an image. By using the Trainable Weka Segmentation Plug-in of Image J software (manufacturer: Image J), the region in which the network region was formed and the part (blank region) where the network region was not formed were divided, the network region was separated, and the relevant area was measured. In the above process, regarding the division of the network region and the blank region, based on the brightness, the parts satisfying the parts where the brightness was 80 or less, and the parts where the brightness was 160 or more due to the height within the closed curve consisting of the relevant parts were defined as the network region, and the other regions were defined as the blank region.

**5. Measurement of particulate binder occupied area ratio on blank region**

After the standard peel test, the blank region of the current collector surface was photographed at a magnification of 5000 times with an FE-SEM (Field Emission Scanning Electron Microscope) device (manufacturer: HITACHI, trade name: S4800) to obtain an image. Using the Color Threshold function of Image J software (manufacturer: Image J), the region in which the binder was present and the region in which the binder was not present on the blank region were separated, and the area of the region in which the binder was present was measured. In the above process, regarding the division of the region in which the binder was present and the region in which the binder was not present on the blank region, based on the brightness, the case where the brightness was 96 or less was defined as the region in which the binder was present, whereby the occupied area of the binder on the blank region was measured. Thereafter, the binder area ratio of the blank region was derived through the calculation of (occupied area of the binder on the blank region/occupied area of the blank region) × 100.

**6. Height measurement of network region**

After the standard peel test, the surface of the current collector was observed with a confocal laser spectro microscope (manufacturer: Keyenece, product name: VK-X200) to obtain 5 or more images at a magnification of 3000 times, and the heights of the network region at 3 sites or more for each image and a total of 20 sites or more were measured, whereby the arithmetic mean was designated as the height of the network region.

**7. Confirmation of particle diameters of particulate binder and electrode active material**

The average particle diameters (D50 particle diameters) of the particulate binder and the electrode active material were measured with Marvern's MASTERSIZER3000 equipment in accordance with ISO-13320 standard. Upon the measurement, water was used as a solvent. When a material to be measured (particulate binder or electrode active material) is dispersed in the solvent and irradiated with lasers, the lasers are scattered by the binder dispersed in the solvent, and the intensities and directionality values of the scattered lasers vary depending on the size of the particles, so that it is possible to obtain the average particle diameter by analyzing these with the Mie theory. Through the above analysis, a volume-based cumulative graph of the particle size distribution was obtained through conversion to the particle diameters of spheres having the same volume as that of the dispersed binder, and the particle diameter (median particle diameter) at 50% cumulative of the graph was designated as the average particle diameter (D50 particle diameter).

In addition, the particle diameter at 90% cumulative of the volume-based cumulative graph was designated as the 90% volume cumulative particle diameter (D90), and the particle diameter at 10% cumulative was designated as the 10% volume cumulative particle diameter (D10).

**8. Measurement of adhesion force**

After rolling, the electrode was cut to have a width of 20mm or so, and the adhesion force was measured according to a known method for measuring the adhesion force of the active material layer. Upon measuring the adhesion force, the peel angle was 90 degrees, and the peel rate was 5 mm/sec or so. After the measurement, the portions where the peaks were stabilized were averaged and defined as the adhesion force.

**Example 1.**

A copper foil (Cu foil) with a thickness of 8$\mu$m was used as a current collector, and after adjusting the water contact angle and O/N ratio of the surface by atmospheric pressure plasma treatment as follows, it was applied to the manufacture of the electrode.

The copper foil was exposed to the plasma, which was generated by applying a voltage of 8kV (power density: 4.17 W/cm$^2$) while injecting nitrogen (N$_2$) into the chamber at a flow rate of 300 LPM, and injecting air at a flow rate of 0.6 LPM, for 1.2 seconds while being transferred at a speed of about 50mm/sec to perform the atmospheric pressure plasma treatment.

After the above operation, the water contact angle of the current collector surface was measured in the above-described manner. As a result of confirmation, the water contact angle at the center of the current collector was about 10.20 degrees, the water contact angle at the right edge portion was about 10.60 degrees, and the water contact angle at the left edge portion was about 10.15 degrees. The arithmetic average of the water contact angles at the three regions, about 10.32 degrees, was used as the water contact angle of the current collector.

Meanwhile, the O/N ratio of the current collector surface after the atmospheric pressure plasma treatment was about 40.8.

As a slurry, a slurry comprising water, an SBR (styrene-butadiene rubber) binder, a thickener (CMC, carboxymethyl cellulose) and an electrode active material (1) (artificial graphite (GT)), and an electrode active material (2) (natural graphite (PAS)) in a weight ratio of 48.5:1:0.5:45:5 (water: SBR: CMC: active material (1): active material (2)) was used. Here, the average particle diameter (D50 particle diameter) of the electrode active material (1) (GT) was about 20 $\mu$m or so, the D10 particle diameter was about 8 $\mu$m or so, and the D90 particle diameter was about 28 $\mu$m or so. In addition, here, the average particle diameter (D50 particle diameter) of the electrode active material (2) (PAS) was about 15 $\mu$m or so, the D10 particle diameter was about 6 $\mu$m or so, and the D90 particle diameter was about 25 $\mu$m or so.

Here, the water is a solvent having a dipole moment of about 1.84 D or so, and the SBR binder is a binder having a solubility parameter of about 16.9 MPa$^{1/2}$ or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

The slurry was applied to a thickness of about 280 $\mu$m or so on the surface of the current collector having a water contact angle of about 10.32 degrees by a gap coating method, and heat-treated at a temperature of about 75°C for about 10 minutes. After heat-treatment, an electrode having a thickness of about 180 $\mu$m or so was obtained, and the dried slurry layer was rolled with a conventional electrode rolling mill to have a final thickness of about 110$\mu$m or so and a porosity of about 26% or so, thereby forming an active material layer.

The porosity of the active material layer is a value calculated by a method of comparing the ratio of the difference between the real density and the density after rolling. In addition, when considering the compositions of the slurry, the content of the SBR binder in the active material layer of the electrode is about 1.94 weight% or so, and the content of the electrode active material is about 97 weight% or so.

**Example 2.**

An electrode was manufacture in the same manner as in Example 1, except that upon the atmospheric pressure plasma treatment, the copper foil was exposed to the plasma, which was generated by applying a voltage of 8kV (power density: 4.17 W/cm$^2$) while injecting nitrogen (N2) into the chamber at a flow rate of 300 LPM, and injecting air at a flow rate of 0.6 LPM, for 6 seconds while being transferred at a speed of about 10mm/sec to perform it.

As a result of measuring the water contact angle of the current collector surface after the plasma treatment in the manner of Evaluation Example 1, the water contact angle at the center of the current collector was about 5.10 degrees, the water contact angle at the right edge portion was about 6.16 degrees, and the water contact angle at the left edge portion was about 4.25 degrees. The arithmetic average of the water contact angles at the three regions, about 5.17 degrees, was used as the water contact angle of the current collector.

Meanwhile, the O/N ratio of the current collector surface after the atmospheric plasma treatment was about 35.4.

The composition of the slurry used for manufacturing the electrode, the coating method, the drying conditions, and the rolling method, and the like are the same as in Example 1.

**Comparative Example 1.**

An electrode was manufactured in the same manner as in Example 1, except that a copper foil without plasma treatment was used.

As a result of measuring the water contact angle of the copper foil in the manner of Evaluation Example 1, the water contact angle at the center of the current collector was about 15.14 degrees, the water contact angle at the right edge portion was about 16.62 degrees, and the water contact angle at the left edge portion was about 15.74 degrees. The arithmetic average of the water contact angles at the three regions, about 15.83 degrees, was used as the water contact angle of the current collector.

Meanwhile, the O/N ratio of the copper foil surface was about 56 to 63.7 or so.

The composition of the slurry used for manufacturing the electrode, the coating method, the drying conditions, and the rolling method, and the like are the same as in Example 1.

**Test Example 1. Network region and blank region**

A standard peel test was performed on the electrodes of Examples 1 and 2 and Comparative Example 1 in the above manner, and the network region and the blank region formed on the current collector surface were confirmed.

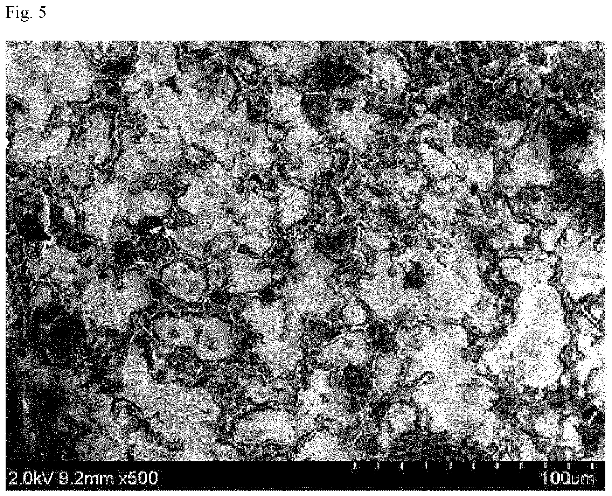

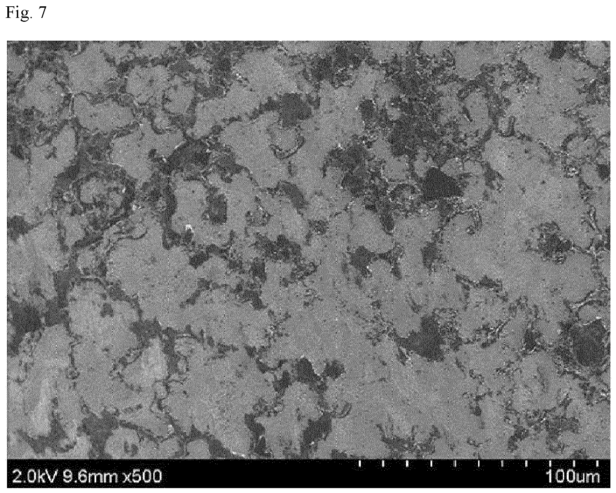

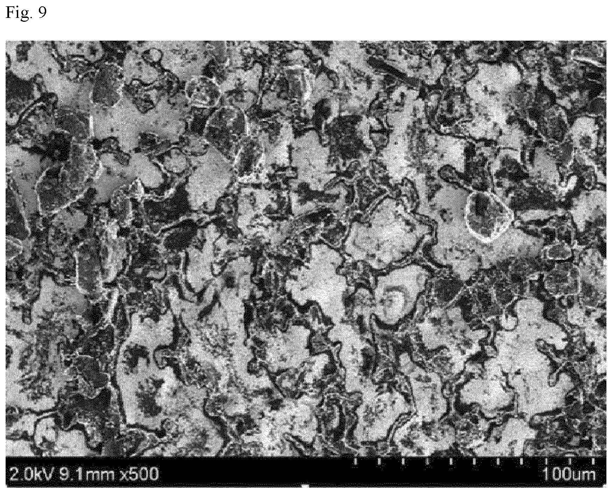

Figures 5, 7 and 9 are images obtained by photographing the current collector surfaces at a magnification of 500 times with an FE-SEM device after performing a standard peel test for the electrodes of Examples 1 and 2, and Comparative Example 1, respectively.

As a result of confirmation, the ratio of the occupied area of the blank region on the current collector surface in Example 1 was about 52.3%, the ratio of the occupied area of the blank region on the current collector surface in Example 2 was about 65.8%, and the ratio of the occupied area of the blank region on the current collector surface in Comparative Example 1 was about 46.5% or so.

In addition, the ratio of the area occupied on the surface of the current collector of the network region of Example 1 was about 47.5% or so, and the ratio of the area occupied on the surface of the current collector of the network region of Example 2 was about 34.1% or so, and Comparative Example The ratio of the area occupied on the surface of the current collector in the network region of No. 1 was about 52.4% or so.

**Test Example 2. Confirmation of height of the network region**

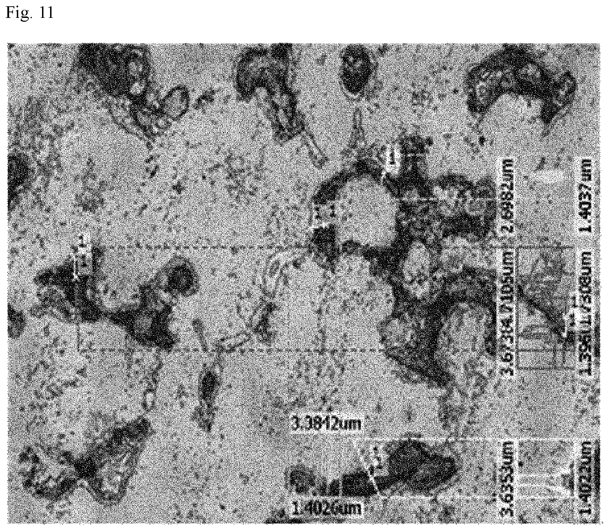

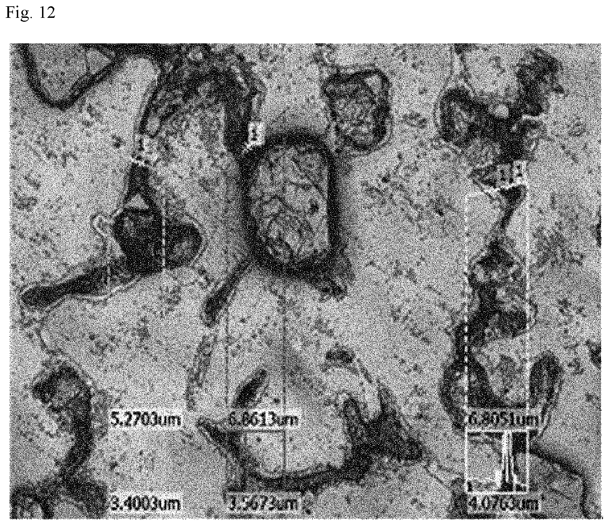

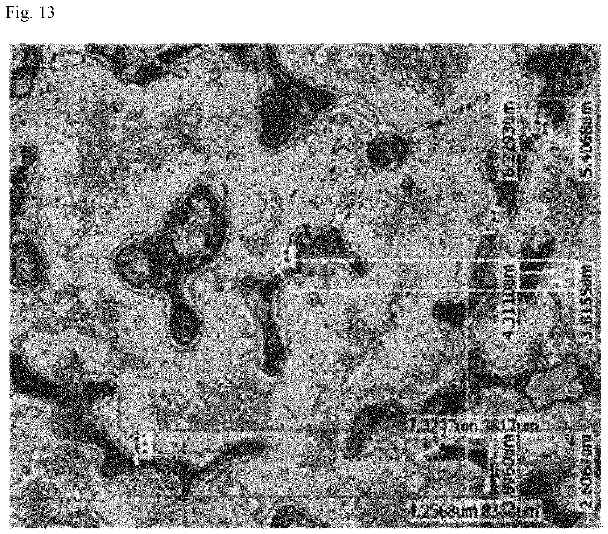

After the standard peel test, the height of the network region on the surface of the current collector was measured. Figures 11 to 13 are confocal laser spectro microscope images of Examples 1 and 2, and Comparative Example 1, respectively.

The heights of the respective network regions were 2.16 $\mu$m, 1.6 $\mu$m, and 1.21 $\mu$m, in order.

**Test Example 3. Confirmation of occupied area ratio of particulate binder on blank region**

The electrodes of Examples 1 and 2, and Comparative Example 1 were subjected to a standard peel test in the above manner, and the ratio of the occupied area of the particulate binder on the blank region was confirmed.

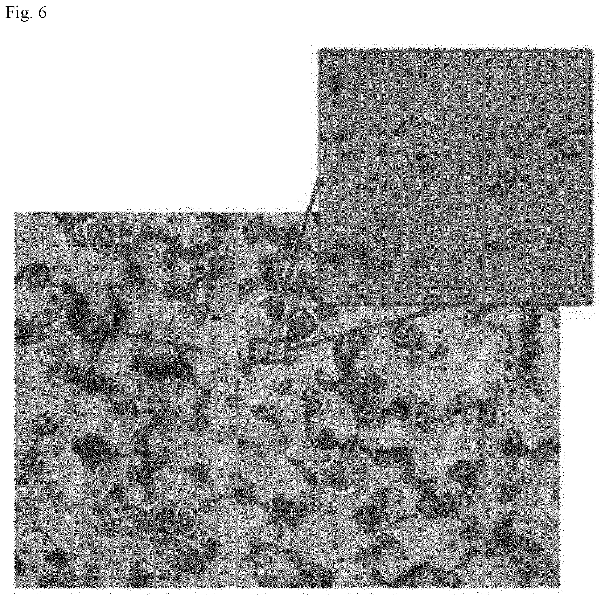

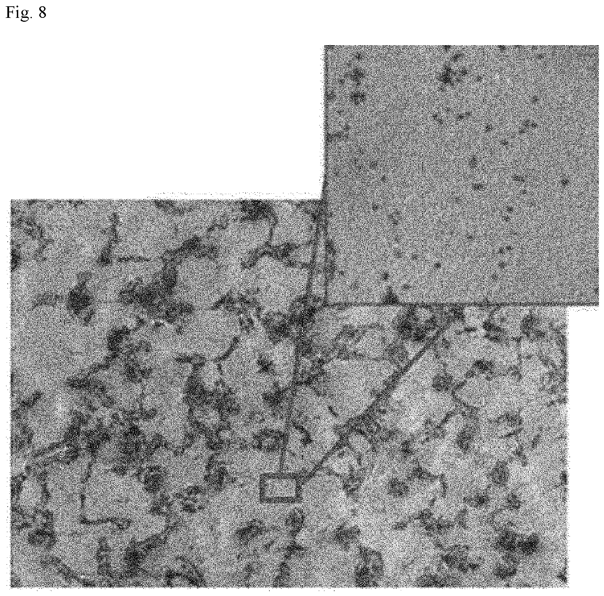

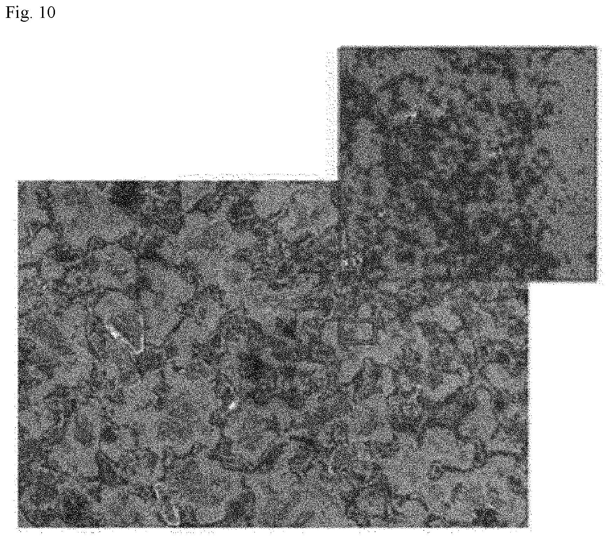

Figures 6, 8, and 10 are images obtained by photographing the current collector surface at a magnification of 5000 times with an FE-SEM device after performing a standard peel test for the electrodes of Examples 1, 2 and Comparative Example 1, respectively.

As a result of confirmation, the ratio of the occupied area of the particulate binder on the blank region in Example 1 was 11.3%, the ratio of the occupied area of the particulate binder on the blank region in Example 2 was 8.2%, and the occupied area of the particulate binder on the blank region in Comparative Example 1 was 33%.

The adhesion force measured in the above-described manner for the electrodes of Examples 1 and 2, and Comparative Example 1 is summarized and described in Table 1 below.

[Table 1]

| | Example 1 | Example 2 | Comparative Example 1 |
|---|---|---|---|
| Adhesion force (gf/20mm) | 42.8 | 39.9 | 26.9 |

From Table 1, it can be confirmed that after the standard peel test, as the network region has a high height, and the ratio of the occupied area of the particulate binder on the blank region is small, while the occupied area of the blank region on the current collector surface is in a certain level, the higher adhesion force is secured.

**Claims**

1. An electrode, comprising:

   a current collector; and
   an active material layer on one or both sides of the current collector,
   wherein the electrode active material layer comprises an electrode active material and a particulate binder,
   wherein a network region and a blank region are observed on a surface of the current collector after the following Standard peel test,
   wherein the network region is a region comprising the particulate binder, and having a height of 3 times or more an average particle diameter of the particulate binder,
   wherein the blank region is a region that does not comprise the particulate binder or a region comprising the particulate binder, and having a height of 1.5 times or less the average particle diameter of the particulate binder, and
   wherein a ratio of an area occupied by the particulate binder on the blank region is 20% or less:
   Standard peel test: The process of attaching a Scotch Magic tape Cat. 810R on the active material layer and then peeled off the Scotch Magic tape Cat. 810R from the active material layer is repeated until no component from the active material layer is observed on the Scotch Magic tape Cat. 810R.

2. The electrode according to claim 1, wherein a ratio of an area occupied by the blank region on the surface of the current collector is 50% or more.

3. The electrode according to claim 1 or 2, wherein a content ratio (O/N) of oxygen to nitrogen on the surface of the current collector is 60 or less.

4. The electrode according to any one of claims 1 to 3, wherein the surface of the current collector has a water contact angle of 15 degrees or less.

5. The electrode according to any one of claims 1 to 4, wherein the binder comprises one or more selected from the group consisting of PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (styrene-butadiene rubber), and fluororubber.

6. The electrode according to any one of claims 1 to 5, wherein the network region has a height of 1.4 $\mu$m or more.

7. The electrode according to any one of claims 1 to 6, wherein an area occupied by the network region satisfies the following equation 1:

$$[\text{Equation 1}]$$

$$A/W \leq 30$$

wherein the A is a ratio (unit: %) of an area occupied by the network region relative to the total area of the surface of the current collector and the W is a content (weight%) of the binder in the active material layer.

8. The electrode according to any one of claims 1 to 7, wherein a ratio of the binder in the active material layer is from 0.5 weight% to 10 weight%.

9. The electrode according to any one of claims 1 to 8, wherein a ratio (D90/D10) of a 90% volume cumulative particle diameter (D90) of the electrode active material relative to a 10% volume cumulative particle diameter (D10) of the electrode active material is 15 or less.

10. The electrode according to any one of claims 1 to 9, wherein the electrode active material is a particulate material having an average particle diameter in a range of $1\mu$m to $100\mu$m.

11. The electrode according to any one of claims 1 to 10, wherein a ratio (D1/D2) of an average particle diameter (D1) of the electrode active material relative to an average particle diameter (D2) of the particulate binder is from 10 to 1,000.

12. The electrode according to any one of claims 1 to 11, wherein the electrode active material is comprised in an amount of 1000 to 10000 parts by weight relative to 100 parts by weight of the binder.

13. The electrode according to any one of claims 1 to 12, wherein the active material layer has a thickness in a range of $10\mu$m to $500\mu$m.

14. An electrochemical element, comprising:
    the electrode of any one of claims 1 to 13 as a negative electrode or a positive electrode.

15. A secondary battery, comprising:
    the electrode of any one of claims 1 to 13 as a negative electrode or a positive electrode.

Fig. 1

| 200 |
|-----|
| 100 |

Fig. 2

Rolling

Fig. 3

Fig. 4

Fig. 5

Fig. 6

Fig. 7

2.0kV 9.6mm x500 100um

Fig. 8

Fig. 9

Fig. 10

Fig. 11

Fig. 12

Fig. 13

# EP 4 287 287 A1

**INTERNATIONAL SEARCH REPORT**

International application No.

**PCT/KR2022/001664**

| A. | CLASSIFICATION OF SUBJECT MATTER |
|---|---|

H01M 4/04(2006.01)i; H01M 4/66(2006.01)i; H01M 4/13(2010.01)i; H01M 4/62(2006.01)i; H01M 4/02(2006.01)i

According to International Patent Classification (IPC) or to both national classification and IPC

| B. | FIELDS SEARCHED |
|---|---|

Minimum documentation searched (classification system followed by classification symbols)

H01M 4/04(2006.01); H01M 10/052(2010.01); H01M 10/36(2006.01); H01M 4/02(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 집전체(current collector), 활물질층(active material layer), 플라즈마(plasma), 바인더(binder), 접착력(adhesion)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 5522487 B2 (TOYOTA MOTOR CORP.) 18 June 2014 (2014-06-18)<br>See paragraphs [0020]-[0026], [0036], [0046] and [0080]; and figures 1 and 5. | 1-3 |
| X | KR 10-2016-0033482 A (LG CHEM, LTD.) 28 March 2016 (2016-03-28)<br>See paragraphs [0029], [0054]-[0056], [0059] and [0062]; and example 1. | 1-3 |
| A | US 2009-0098457 A1 (KWON, M. et al.) 16 April 2009 (2009-04-16)<br>See entire document. | 1-3 |
| A | JP 2018-073645 A (TOYOTA MOTOR CORP.) 10 May 2018 (2018-05-10)<br>See entire document. | 1-3 |
| E | KR 10-2022-0043049 A (LG ENERGY SOLUTION, LTD.) 05 April 2022 (2022-04-05)<br>See claims 1-15. | 1-3 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 May 2022** | **16 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/001664** |

**Box No. II        Observations where certain claims were found unsearchable (Continuation of item 2 of first sheet)**

This international search report has not been established in respect of certain claims under Article 17(2)(a) for the following reasons:

1. ☐    Claims Nos.:
    because they relate to subject matter not required to be searched by this Authority, namely:

2. ☐    Claims Nos.:
    because they relate to parts of the international application that do not comply with the prescribed requirements to such an extent that no meaningful international search can be carried out, specifically:

3. ☑    Claims Nos.: **4-15**
    because they are dependent claims and are not drafted in accordance with the second and third sentences of Rule 6.4(a).

Form PCT/ISA/210 (continuation of first sheet) (July 2019)

**INTERNATIONAL SEARCH REPORT**
Information on patent family members

International application No.

**PCT/KR2022/001664**

| Patent document cited in search report | | | Publication date (day/month/year) | Patent family member(s) | | | Publication date (day/month/year) |
|---|---|---|---|---|---|---|---|
| JP | 5522487 | B2 | 18 June 2014 | CN | 102106020 | A | 22 June 2011 |
| | | | | CN | 102106020 | B | 09 October 2013 |
| | | | | CN | 102272982 | A | 07 December 2011 |
| | | | | CN | 102272982 | B | 11 June 2014 |
| | | | | EP | 2330663 | A1 | 08 June 2011 |
| | | | | EP | 2330663 | A4 | 22 January 2014 |
| | | | | EP | 2330663 | B1 | 26 September 2018 |
| | | | | EP | 2461396 | A1 | 06 June 2012 |
| | | | | EP | 2461396 | A4 | 22 January 2014 |
| | | | | EP | 2461396 | B1 | 06 May 2020 |
| | | | | JP | 2013-013413 | A1 | 07 January 2013 |
| | | | | JP | 2013-013414 | A1 | 07 January 2013 |
| | | | | JP | 5445871 | B2 | 19 March 2014 |
| | | | | US | 2012-0115027 | A1 | 10 May 2012 |
| | | | | US | 2012-0135304 | A1 | 31 May 2012 |
| | | | | US | 8343656 | B2 | 01 January 2013 |
| | | | | US | 9159986 | B2 | 13 October 2015 |
| | | | | WO | 2011-013413 | A1 | 03 February 2011 |
| | | | | WO | 2011-013414 | A1 | 03 February 2011 |
| KR | 10-2016-0033482 | A | 28 March 2016 | None | | | |
| US | 2009-0098457 | A1 | 16 April 2009 | KR | 10-2009-0038309 | A | 20 April 2009 |
| JP | 2018-073645 | A | 10 May 2018 | JP | 6766596 | B2 | 14 October 2020 |
| KR | 10-2022-0043049 | A | 05 April 2022 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210013321

- KR 1020210013323